(19) Europäisches Patentamt
European Patent Office
Office européen des brevets

(11) **EP 3 355 210 A1**

(12) **EUROPEAN PATENT APPLICATION**
published in accordance with Art. 153(4) EPC

(43) Date of publication:
**01.08.2018 Bulletin 2018/31**

(21) Application number: **17805667.7**

(22) Date of filing: **18.05.2017**

(51) Int Cl.:
***G06F 17/30*** *(2006.01)*

(86) International application number:
**PCT/CN2017/084897**

(87) International publication number:
**WO 2017/206722 (07.12.2017 Gazette 2017/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **02.06.2016 CN 201610390304**

(71) Applicant: **Tencent Technology (Shenzhen) Company Limited**
**Shenzhen, Guangdong 518057 (CN)**

(72) Inventors:
- **YANG, Xiwang**
  **Shenzhen**
  **Guangdong 518057 (CN)**
- **PENG, Chong**
  **Shenzhen**
  **Guangdong 518057 (CN)**
- **CHEN, Gong**
  **Shenzhen**
  **Guangdong 518057 (CN)**
- **HUANG, Shi**
  **Shenzhen**
  **Guangdong 518057 (CN)**
- **ZHANG, Bifeng**
  **Shenzhen**
  **Guangdong 518057 (CN)**

(74) Representative: **Barker Brettell LLP**
**100 Hagley Road**
**Edgbaston**
**Birmingham B16 8QQ (GB)**

# (54) MEDIA FILE RELEASE METHOD AND APPARATUS

(57) The present disclosure discloses a media file delivery method and apparatus. The method includes: obtaining a target delivery volume and an actual delivery volume of a media file; comparing the target delivery volume with the actual delivery volume to obtain a comparison result; adjusting a correlation parameter of the media file according to the comparison result, wherein the correlation parameter indicates a correlation between the media file and a delivery object of the media file; and delivering the media file, wherein a delivery sequence of the media file is determined according to the correlation parameter. The present disclosure solves a technical problem of a related technology that the media file may be delivered to a delivery object with a relatively low correlation in order to ensure an exposure volume of the media file.

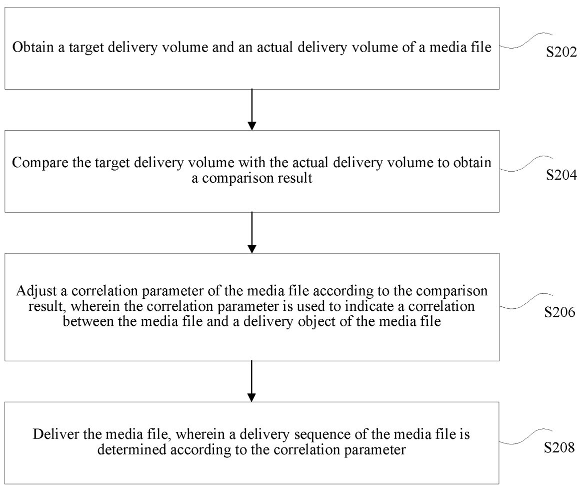


FIG. 2

EP 3 355 210 A1

Printed by Jouve, 75001 PARIS (FR)

## Description

RELATED APPLICATION

This application claims priority to Chinese Patent Application No. 201610390304.2, entitled "MEDIA FILE DELIVERY METHOD AND APPARATUS" filed with the Patent Office of China on June 2, 2016, which is incorporated by reference in its entirety.

FIELD OF THE TECHNOLOGY

The present disclosure relates to the field of computers, and in particular, to a media file delivery method and apparatus.

BACKGROUND OF THE DISCLOSURE

With the rapid development of computer technologies, in related technologies, a media file may be delivered to a delivery object to increase an exposure volume of the delivered media file. For example, an advertisement of an application may be delivered to an application user. However, to ensure the exposure volume of the media file, in a related technology, delivery of the media file is generally controlled by adjusting the delivery possibility of the media file. For example, when a delivery speed of an advertisement is relatively fast, the delivery possibility of the advertisement may be reduced. However, when adopting the manner of adjusting the delivery possibility of the media file, the media file may be delivered to a delivery object with a relatively low correlation.

For the foregoing problem, no effective solution is provided currently.

SUMMARY

Embodiments of the present invention provide a media file delivery method and apparatus, which may at least solve a technical problem of a related technology that the media file may be delivered to a delivery object with a relatively low correlation in order to ensure an exposure volume of the media file.

According to an aspect of the embodiments of the present invention, a media file delivery method is provided and includes: obtaining a target delivery volume and an actual delivery volume of a media file; comparing the target delivery volume with the actual delivery volume to obtain a comparison result; adjusting a correlation parameter of the media file according to the comparison result, wherein the correlation parameter indicates a correlation between the media file and a delivery object of the media file; and delivering the media file, wherein a delivery sequence of the media file is determined according to the correlation parameter.

According to another aspect of the embodiments of the present invention, a media file delivery apparatus is further provided and includes: an obtaining module, configured to obtain a target delivery volume and an actual delivery volume of a media file; a comparison module, configured to compare the target delivery volume with the actual delivery volume to obtain a comparison result; an adjusting module, configured to adjust a correlation parameter of the media file according to the comparison result, wherein the correlation parameter indicates a correlation between the media file and a delivery object of the media file; and a delivery module, configured to deliver the media file, wherein a delivery sequence of the media file is determined according to the correlation parameter.

In the embodiments of the present invention, the correlation parameter of the media file is adjusted according to the comparison result between the target delivery volume and the actual delivery volume of the media file, and the media file is delivered according to the correlation between the media file indicated by the correlation parameter and the delivery object. By virtue of the solution, the media file can be delivered to a delivery object with a relatively high correlation under the premise of ensuring an exposure volume of the media file. The embodiments achieve a technical effect of improving the delivery precision of the media file to further improve the delivery efficiency of the media file, and solve a technical problem of a related technology that the media file may be delivered to a delivery object with a relatively low correlation to ensure the exposure volume of the media file.

BRIEF DESCRIPTION OF THE DRAWINGS

The accompanying drawings described herein are used to provide deeper understanding of the present disclosure, and form a part of the present application. Exemplary embodiments of the present invention and descriptions of the exemplary embodiments are used to explain the present disclosure, and do not form an improper limitation to the present disclosure. In the accompanying drawings:

FIG. 1 is a schematic diagram of a hardware environment of a media file delivery method according to an embodiment of the present invention;

FIG. 2 is a flowchart of an optional media file delivery method according to an embodiment of the present invention;

FIG. 3 is a schematic diagram of an overall architecture of a media file delivery method according to a preferred embodiment of the present invention;

FIG. 4 is a processing flowchart of advertisement delivery according to a preferred embodiment of the present invention;

FIG. 5 is a schematic diagram of an optional media file delivery apparatus according to an embodiment of the present invention;

FIG. 6 is a schematic diagram of another optional media file delivery apparatus according to an embodiment of the present invention;

FIG. 7 is a schematic diagram of still another optional media file delivery apparatus according to an embodiment of the present invention;

FIG. 8 is a schematic diagram of yet another optional media file delivery apparatus according to an embodiment of the present invention; and

FIG. 9 is a structural block diagram of a terminal according to an embodiment of the present invention.

DESCRIPTION OF EMBODIMENTS

To make a person skilled in the art understand the solutions in the present disclosure better, the following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

It should be noted that, the terms "first" and "second" in the specification and the claims of the present disclosure and the foregoing accompanying drawings are used to distinguish similar objects, and do not need to be used to describe a particular sequence or order. It should be understood that data used in this way is interchangeable in a suitable case, so that the embodiments of the present invention described herein can be implemented in a sequence in addition to the sequence shown or described herein. In addition, the terms "include", "comprise", and any variants thereof are intended to cover a non-exclusive inclusion. For example, a process, method, system, product, or device that includes a series of steps or elements is not limited to the steps or units that are clearly listed, but may include other steps or units that are not clearly listed or that are inherent to the process, method, product, or device.

Embodiment 1

According to this embodiment of the present invention, a method embodiment of a media file delivery method is provided.

Optionally, in this embodiment, the media file delivery method may be applied to a hardware environment constructed by a server 102 and a terminal 104 shown in FIG. 1. As shown in FIG. 1, the server 102 is connected to the terminal 104 via a network. The network includes, but is not limited to: a wide area network, a metropolitan area network, or a local area network. The terminal 104 is not limited to a PC, a mobile phone, a tablet computer, or the like. The media file delivery method in this embodiment of the present invention may be performed by the server 102, or may be performed by the terminal 104, or may be performed jointly by the server 102 and the terminal 104. The media file delivery method in this embodiment of the present invention may also be performed by a client installed on the terminal 104.

FIG. 2 is a flowchart of an optional media file delivery method according to an embodiment of the present invention. As shown in FIG. 2, the method may include the following steps:

Step S202. Obtain a target delivery volume and an actual delivery volume of a media file.

Step S204. Compare the target delivery volume with the actual delivery volume to obtain a comparison result.

Step S206. Adjust a correlation parameter of the media file according to the comparison result, wherein the correlation parameter indicates a correlation between the media file and a delivery object of the media file.

Step S208. Deliver the media file, wherein a delivery sequence of the media file is determined according to the correlation parameter.

Through the foregoing step S202 to step S208, the correlation parameter of the media file is adjusted according to the comparison result between the target delivery volume and the actual delivery volume of the media file, and the media file is delivered according to the correlation between the media file indicated by the correlation parameter and the delivery object. The method solves a technical problem of a related technology that the media file may be delivered to a delivery object with a relatively low correlation in order to ensure an exposure volume of the media file, and achieves a technical effect of improving the delivery precision of the media file to further improve the delivery efficiency of the media file.

In the technical solution provided in step S202, this embodiment of the present invention does not specifically limit the type of the media file. The media file may be a video file, an audio file, a picture file, or a text file, or may be any combination of the several types of files, for example, a combination of a text file and a picture file, or a combination of a video file and a text file. A specific product form may be a video advertisement, a native advertisement, a banner advertisement, a search advertisement, or the like. The media file may be a file to be delivered. The target delivery volume of the media file is the quantity of media files to be delivered that is predetermined with the delivery object. The actual delivery volume of the media file is the quantity of media files actually delivered to the delivery object. Herein, it should be noted that, the delivery object of the media file may be a web page user, an application user, or the like. This embodiment of the present invention does not limit the type of the delivery object of the media file.

It should be noted that, the target delivery volume and the actual delivery volume of the media file refer to the target delivery volume and the actual delivery volume of the media file from a delivery start time to a current time. The actual delivery volume of the media file to the current time may be recorded by using a counter. Each time the media file is delivered, the counter is added by 1, and the actual delivery volume of the media file to the current time is equal to a count value of the counter. It should be noted that, the foregoing manner of obtaining the actual delivery volume of the media file to the current time is only an optional embodiment of the embodiments of the present invention. In this embodiment of the present invention, the actual delivery volume of the media file to the current time may also be obtained by using another manner. Herein, no example is provided again for description.

As an optional embodiment, the target delivery volume of the media file to the current time may be determined according to an exposure opportunity curve of the media file. It should be noted that, the exposure opportunity curve is the counted quantity, distributed with time, of media files requested by a user when the user comes online. A media file scheduling system may provide media file scheduling information. The media file scheduling information may include the following information: a delivery start time of the media file, a delivery end time of the media file, and a delivery volume of the media file corresponding to each time scale. The target delivery volume of the media file to the current time may be calculated according to the exposure opportunity curve of the media file and according to the following formula:

$$paced_\exp o = \frac{\int_{t_{start}}^{t_{curr}} c(t)dt}{\int_{t_{start}}^{t_{end}} c(t)dt} \times \exp o_num$$

where $c(t)$ is an exposure opportunity curve of the media file, $t_{start}$ is a delivery start time of the media file, $t_{end}$ is a delivery end time of the media file, $t_{curr}$ is a current time, $\exp o_num$ is a total delivery volume of the media file, and $paced_\exp o$ is the target delivery volume of the media file from the delivery start time to the current time.

It should be noted that, the foregoing manner of obtaining the target delivery volume of the media file to the current time is only an optional embodiment of the embodiments of the present invention. In this embodiment of the present invention, the target delivery volume of the media file to the current time may also be obtained by using another manner. Herein, no example is provided again for description. In the optional embodiment, the target delivery volume of the media file to the current time is obtained by using the exposure opportunity curve of the media file. Compared with another obtaining manner, the exposure opportunity curve obtained according to pull by a user is more convenient,

and the exposure opportunity curve can accurately reflect a delivery process of the media file. Therefore, obtaining the target delivery volume of the media file to the current time by using the exposure opportunity curve is more convenient and effective, and the accuracy of the obtained target delivery volume can be ensured.

In this embodiment of the present invention, the manner of obtaining the target delivery volume and the actual delivery volume of the media file is not specifically limited provided that a variation manner and a replacement manner of obtaining the target delivery volume and the actual delivery volume of the media file to the current time fall within the protection scope of the present disclosure.

In the technical solution provided by step S204, after the target delivery volume and the actual delivery volume of the media file to the current time are obtained by using step S202, in this embodiment of the present invention, the obtained target delivery volume may be compared with the obtained actual delivery volume, to compare a magnitude relationship between the target delivery volume and the actual delivery volume to obtain a comparison result. It should be noted that, the comparison result obtained by comparing the target delivery volume with the actual delivery volume may include the following several cases: The actual delivery volume is less than the target delivery volume; the actual delivery volume is greater than the target delivery volume; and the actual delivery volume is equal to the target delivery volume. The foregoing three cases may reflect the delivery speed of the media file. Specifically, when the actual delivery volume is less than the target delivery volume, it indicates that the delivery speed of the media file is excessively slow; when the actual delivery volume is greater than the target delivery volume, it indicates that the delivery speed of the media file is excessively fast; and when the actual delivery volume is equal to the target delivery volume, it indicates that the delivery speed of the media file is suitable, and when the media file is delivered according to the delivery speed, a total volume of predetermined media files to be delivered may be completed in a time period from the delivery start time to the delivery end time. By comparing the actual delivery volume with the target delivery volume, the delivery speed of the media file can be controlled according to the comparison result.

Optionally, the comparison result obtained by comparing the target delivery volume with the actual delivery volume may further include a difference value between the actual delivery volume and the target delivery volume. That is, when the actual delivery volume is less than the target delivery volume, the actual delivery volume is less than the value of the target delivery volume; and when the actual delivery volume is greater than the target delivery volume, the actual delivery volume is greater than the value of the target delivery volume. By comparing the difference value between the actual delivery volume and the target delivery volume, the delivery speed of the media file can be adjusted more accurately.

In the technical solution provided by step S206, the comparison result obtained by comparing the target delivery volume with the actual delivery volume of the media file may affect the correlation between the media file and the delivery object of the media file. The correlation between the media file and the delivery object of the media file may be directly indicated by the correlation parameter of the media file. A larger correlation parameter of the media file indicates a higher correlation between the media file and the delivery object; and a smaller correlation parameter of the media file indicates a lower correlation between the media file and the delivery object. It should be noted that, correlations between multiple different media files and a same delivery object may be different, and correlations between a same media file and different delivery objects may be different. The correlation between the media file and the delivery object of the media file may affect the delivery sequence of the media file, and a delivery sequence of a media file with a higher correlation to the delivery object has a higher priority than that of a media file with a lower correlation to the delivery object. It should be noted that, a same media file may be delivered to a same delivery object. The number of delivery times may be set according to an actual application scenario; or multiple different media files may be delivered to a same delivery object, and correlations between the media files and the delivery object are different. That is, correlation parameters of the media files are different, and correspondingly, priorities of delivery sequences for delivering the media files to the delivery object are different.

For example, the delivery object is user A, and media files delivered to user A are separately advertisement 1, advertisement 2, and advertisement 3. If a descending sequence of correlations between the advertisements and user A is advertisement 1, advertisement 2, and advertisement 3, correspondingly, a descending priority of a delivery sequence for delivering advertisements to user A is advertisement 1, advertisement 2, and advertisement 3.

The comparison result between the actual delivery volume and the target delivery volume of the media file may reflect the correlation between the media file and the delivery object. Specifically, when the actual delivery volume of the media file is less than the target delivery volume, if the media file may win exposure of the delivery object, it indicates that the correlation between the media file and the delivery object is relatively high; and when the actual delivery volume of the media file is greater than the target delivery volume, if the media file cannot win exposure of the delivery object, it indicates that the correlation between the media file and the delivery object is relatively low.

In this embodiment of the present invention, the correlation parameter of the media file is adjusted according to the comparison result between the target delivery volume and the actual delivery volume of the media file, so as to adjust the correlation between the media file and the delivery object to further adjust the delivery sequence of the media file.

As an optional embodiment, step S206 of adjusting a correlation parameter of the media file according to the

comparison result may include the following steps:

Step S2061. Increase a value of the correlation parameter when the comparison result indicates that the actual delivery volume is less than the target delivery volume, wherein a delivery sequence determined by the correlation parameter before the value is increased is later than a delivery sequence determined by the correlation parameter after the value is increased.

Step S2063. Decrease a value of the correlation parameter when the comparison result indicates that the actual delivery volume is greater than the target delivery volume, wherein a delivery sequence determined by the correlation parameter before the value is decreased is earlier than a delivery sequence determined by the correlation parameter after the value is decreased.

It should be noted that, the comparison result obtained by comparing the target delivery volume with the actual delivery volume of the media file may include: The actual delivery volume is less than or greater than the target delivery volume. When the actual delivery volume is less than the target delivery volume (for example, the actual delivery volume is less than the target delivery volume by a first preset threshold), in this embodiment of the present invention, the correlation between the media file and the delivery object may be improved, and it is more likely that the media file is delivered. That is, when the correlation between the media file and the delivery object is relatively high, the media file needs to be preferentially delivered. In this case, in this embodiment of the present invention, the value of the correlation parameter of the media file may be increased to improve the priority of the delivery sequence of the media file, so that the delivery sequence corresponding to the correlation indicated after the value of the correlation parameter of the media file is increased is earlier than the delivery sequence corresponding to the correlation indicated before the value is increased. When the actual delivery volume is greater than the target delivery volume (for example, the actual delivery volume is greater than the target delivery volume by a second preset threshold, where both the first preset threshold and the second preset threshold are greater than 0, and the first preset threshold and the second preset threshold may be the same or different), it indicates that the media file cannot be exposed by the delivery object. That is, when the correlation between the media file and the delivery object is relatively low, the media file needs to be delivered in a later sequence. In this case, in this embodiment of the present invention, the value of the correlation parameter of the media file may be decreased to reduce the priority of the delivery sequence of the media file, so that the delivery sequence corresponding to the correlation indicated after the value of the correlation parameter of the media file is decreased is later than the delivery sequence corresponding to the correlation indicated before the value is decreased. It should be noted that, this embodiment of the present invention does not specifically limit the first preset threshold and the second preset threshold, and the first preset threshold and the second preset threshold may be set according to an actual requirement. Further, it should be noted that, a difference value by which the actual delivery volume of the media file is less than the target delivery volume may be the same as or may be different from a difference value by which the actual delivery volume is greater than the target delivery volume. This is not specifically limited herein.

In this embodiment of the present invention, the value of the correlation parameter of the media file is adjusted according to the comparison result between the actual delivery volume and the target delivery volume of the media file, to adjust the delivery sequence of the media file, so that a media file with a higher correlation to the delivery object may be preferentially delivered, and a media file with a lower correlation to the delivery object may be delivered later, so as to achieve the effect of increasing an exposure rate of the media file to improve the delivery efficiency of the media file.

In the technical solution provided by step S208, the correlation parameter of the media file may be used to indicate the correlation between the media file and the delivery object. In this embodiment of the present invention, preferably, the delivery sequence of the media file with a higher correlation to the delivery object is put ahead, the delivery sequence of the media file with a lower correlation to the delivery object is put forward, and the media files are delivered according to the adjusted delivery sequences. It should be noted that, there may be one or more media files delivered to a delivery object. When multiple media files are delivered to a delivery object, delivery sequences of the media files may be adjusted according to values of correlation parameters of the media files, so that a media file with a larger value of the correlation parameter is preferentially delivered, to increase the exposure rate of the delivery object for the media file to improve the delivery efficiency of the media file.

Optionally, in this embodiment of the present invention, when the media file is delivered to the delivery object according to the delivery sequence corresponding to the correlation indicated by a related parameter of the media file, a delivery manner may be selected according to the type of the delivery object. This embodiment of the present invention does not specifically limit the type of the delivery object, which may be a web page user, an application user, or the like. This embodiment of the present invention also does not specifically limit the delivery manner of delivering the media file to the delivery object. The media file may be automatically displayed in a pop-up form, or a user may be prompted to view the delivered media file in a message prompt form, or the delivered media file may be displayed when an application starts. The delivery manner of the media file may be set or adjusted according to the type of the media file, the type of

the delivery object, and the type of a terminal in which the delivery object is located. Herein, no example is provided again for description.

As an optional embodiment, step S206 of adjusting a correlation parameter of the media file according to the comparison result may include the following steps:

Step S2062. Adjust a delivery control parameter according to the comparison result to obtain an adjusted delivery control parameter, wherein the comparison result is used for increasing or decreasing a value of the delivery control parameter by a first preset proportion.

In the technical solution provided by step S2062, the delivery control parameter may be used to indicate a delivery speed of the media file. The value of the delivery control parameter may be adjusted according to the comparison result between the actual delivery volume and the target delivery volume of the media file. Specifically, when the actual delivery volume of the media file is less than the target delivery volume, it indicates that the delivery speed of the media file at this time is excessively slow, and the value of the delivery control parameter needs to be increased; and when the actual delivery volume of the media file is greater than the target delivery volume, it indicate that the delivery speed of the media file at this time is excessively fast, and the value of the delivery control parameter needs to be decreased. Optionally, the increase or decrease amplitude of the value of the delivery control parameter may be determined according to the difference value between the actual delivery volume and the target delivery volume of the media file. In this embodiment of the present invention, optionally, the value of the delivery control parameter is increased or decreased by a first preset proportion. The amplitude of the first preset proportion may be determined according to the difference value between the actual delivery volume and the target delivery volume of the media file. For example, the first preset proportion may be 0.5%. It should be noted that, the proportions by which the value of the delivery control parameter is increased and decreased may be the same, and are a first preset proportion, or may be different. The proportions by which the value of the delivery control parameter may be specifically set according to an actual situation, and are not specifically limited in this embodiment of the present invention.

Step S2064. Adjust a correlation parameter of the media file according to the adjusted delivery correlation parameter, wherein the adjusted delivery correlation parameter is used for increasing or decreasing a value of the correlation parameter by a second preset proportion.

In the technical solution provided by step S2064, in the present disclosure, the correlation parameter of the media file may be adjusted according to the adjusted delivery control parameter. When the delivery control parameter is increased by the first preset proportion, the value of the correlation parameter of the media file may be correspondingly increased by the second preset proportion; and when the delivery control parameter is decreased by the first preset proportion, the value of the correlation parameter of the media file may be correspondingly decreased by the second preset proportion. It should be noted that, the first preset proportion may be the same as or may be different from the second preset proportion. This embodiment of the present invention does not specifically limit the second preset proportion, which may be set or adjusted according to an actual situation.

It should be noted that, when the actual delivery volume of the media file is less than the target delivery volume, it indicates that the delivery speed of the media file is excessively slow, the media file may be exposed by the delivery object, and the correlation between the media file and the delivery object is relatively high. In this case, the value of the delivery control parameter needs to be increased, and the increased proportion may be the first preset proportion, so that the value of the correlation parameter of the media file is increased, and the increased proportion may be the second preset proportion, so that it may be ensured that the media file can be preferentially delivered to the delivery object, to improve the efficiency of the media file. On the contrary, when the actual delivery volume of the media file is greater than the target delivery volume, it indicates that the delivery speed of the media file is excessively fast, the media file cannot be exposed by the delivery object, and the correlation between the media file and the delivery object is relatively low. In this case, the value of the delivery control parameter needs to be decreased, and the decreased proportion may be the first preset proportion, so that the value of the correlation parameter of the media file is decreased, and the decreased proportion may be the second preset proportion, so that it may be ensured that the delivery sequence of the media file with a lower correlation to the delivery object is put forward, to ensure preferentially delivering the media file with a higher correlation to the delivery object and with the forward sequence, to further improve the efficiency of the media file.

As an optional embodiment, the correlation parameter of the media file may be adjusted according to the following formula:

$$\mathrm{score}(\mathrm{u}, \mathrm{ad}) = \mathrm{score}(\mathrm{u}, \mathrm{ad}) \times \alpha,$$

where score(u, ad) is the correlation parameter of the media file, and $\alpha$ is the delivery control parameter, which indicates a delivery speed of the media file, where

$$\alpha = \begin{cases} \alpha \times \beta^{+}, & \text{when the actual delivery volume is less than the target delivery volume} \\ \alpha \times \beta^{-}, & \text{when the actual delivery volume is greater than the target delivery volume} \end{cases}$$

where $\beta^+$ is a first coefficient, $\beta^+>1$, $\beta^-$ is a second coefficient, and $\beta^-<1$.

It should be noted that, an initial value of the delivery control parameter $\alpha$ may be 1, a change interval of $\alpha$ may be [1, 5], $\beta^+$ is a coefficient greater than 1 and the value may be 1.05, and $\beta^-$ may be a coefficient less than 1 and the value may be 0.95. It should be noted that, the values of the foregoing parameters are all an optional embodiment of the present invention. The values of the foregoing parameters may also be adjusted according to a situation. Herein, no example is provided again for description. When the actual delivery volume of the media file is less than the target delivery volume (for example, the actual delivery volume is less than the target delivery volume by the first preset threshold), the value of the delivery control parameter $\alpha$ may be increased by the first preset proportion, so that the correlation parameter score(u, ad) of the media file may also be increased by the second preset proportion. When the actual delivery volume of the media file is greater than the target delivery volume (for example, the actual delivery volume is greater than the target delivery volume by the first preset threshold), the value of the delivery control parameter $\alpha$ may be decreased by the first preset proportion, so that the correlation parameter score(u, ad) of the media file may also be decreased by the second preset proportion. It should be noted that, u in the correlation parameter score(u, ad) may represent a user who initiates a media file delivery request, and ad may represent a media file requested by the user, such as an advertisement.

It should be noted that, the foregoing manner of calculating the correlation parameter of the media file is only an optional embodiment of the embodiments of the present invention. In this embodiment of the present invention, the correlation parameter of the media file may also be calculated by using another manner. Herein, no example is provided again for description. In the optional embodiment, by calculating the correlation parameter of the media file, the priority of the delivery sequence of the media file may be adjusted according to the correlation parameter, so that a media file with a higher correlation to the delivery object is preferentially delivered, to achieve the effect of improving an exposure volume of multimedia to further improve the delivery efficiency of the media file.

As an optional embodiment, step S202 of obtaining a target delivery volume and an actual delivery volume of a media file may include: Step S2022, Obtain the target delivery volume and the actual delivery volume of the media file at a preset interval. Step S204 of comparing the target delivery volume with the actual delivery volume to obtain a comparison result may include: Step S2042, Compare the target delivery volume with the actual delivery volume at the preset interval. Step S206 of adjusting a correlation parameter of the media file according to the comparison result may include: Step S2062, Adjust the correlation parameter of the media file according to the comparison result at the preset interval.

It should be noted that, the preset time in the optional embodiment may be set or adjusted according to an actual situation. The preset time may be 1 minute, 30 seconds, or the like, and is not specifically limited herein. In the media file delivery method in the optional embodiment, the foregoing steps are performed at a preset interval, to adjust the correlation parameter of the media file at the preset interval, to achieve the effect of improving the accuracy of the correlation parameter of the media file, to improve the precision of adjusting the delivery sequence of the media file.

The present disclosure further provides a preferred embodiment, and a media file in the preferred embodiment is described by using a contract advertisement as an example.

FIG. 3 is a schematic diagram of an overall architecture of a media file delivery method according to a preferred embodiment of the present invention. As shown in FIG. 3, an advertisement online storage system may obtain everyday advertisement scheduling information of each contract advertisement from a scheduling system, including an exposure volume that should be completed, that is, a delivery volume. A weight adjusting module may obtain the advertisement scheduling information from the advertisement online storage system, including an exposure volume that should be completed by each advertisement every day and an exposure volume that has been consumed so far, that is, an actual delivery volume so far. In addition, the weight adjusting module may further obtain an exposure opportunity curve of the contract advertisement from an opportunity curve online storage system. The weight adjusting module obtains a weight adjusting coefficient $\alpha$ calculates that affects an advertisement sequencing indicator score (u, ad) through calculation according to the exposure opportunity curve of the contract advertisement, the exposure volume that should be completed every day by the contract advertisement, and the exposure volume that has been consumed so far, that is, the delivery control parameter $\alpha$ in the foregoing embodiments of the present invention, and sends the weight adjusting coefficient $\alpha$ to the advertisement online storage system for storage. A bidding and sequencing module reads the weight adjusting coefficient $\alpha$ from the advertisement online storage system in real time, and adjusts the advertisement sequencing indicator score (u, ad). The adjusting manner may be: score(u, ad)=score(u, ad)$\times\alpha$.

Herein, it should be noted that, for the exposure opportunity curve of the advertisement, exposure distribution in different cities every day in a week may be calculated. Each opportunity curve may be given in a time sequence manner, and by using each minute as a granularity, and every day has a total of 1440 exposure volume points. The

exposure opportunity curve of the advertisement is stored in the opportunity curve online storage system. By using a time dimension opportunity curve as an example, a key value may be {"Mon", "Tue", "Wed", "Thu", "Fri", "Sat", "Sun"} + "OppCurve", and Value may be a time sequence value. The exposure opportunity curve of the advertisement may be generated by means of routinization, and may be updated every day according to exposure statistics in a latest month. The weight adjusting module reads the exposure opportunity curve of the advertisement from the opportunity curve online storage system. The exposure opportunity curve of the advertisement may be subdivided according to multiple dimensions, for example, may be subdivided according to a single dimension such as which day in a week, cities, user age groups, user gender, or user interests, or may be subdivided according to a multi-dimension combination.

Input data of the weight adjusting module may include the advertisement scheduling information and the exposure opportunity curve of the advertisement obtained from the advertisement online storage system, specifically including the following content: an exposure start time t_start, an exposure end time t_end, and a needed exposure volume expo_num. In addition, the weight adjusting module may further record an actual exposure volume curr_expo from the exposure start time t_start to the current time t_curr.

FIG. 4 is a processing flowchart of advertisement delivery according to a preferred embodiment of the present invention. As shown in FIG. 4, a processing process of the weight adjusting module may include the following steps:

Step S402. Calculate a target exposure volume paced_expo from t_start to t_curr according to an exposure opportunity curve of an advertisement. A specific calculation formula is as follows:

$$paced_expo = \frac{\int_{t_{start}}^{t_{curr}} c(t)dt}{\int_{t_{start}}^{t_{end}} c(t)dt} \times expo_num$$

where *c*(*t*) is the exposure opportunity curve of the advertisement at that day.

Step S404. Determine a delivery speed of the advertisement.

If curr_expo < paced_expo×under_delivery_coeff, the advertisement delivery is excessively slow, that is, underdelivery; and if curr_expo > paced_expo×over_delivery_coeff, the advertisement delivery is excessively fast, that is, overdelivery. The value of under_delivery_coeff is a real number close to 1 but less than 1, such as 0.95, and the value of over_delivery_coeff is a real number close to 1 but greater than 1, such as 1.05.

Step S406. Adjust a weight adjusting coefficient $\alpha$ according to the delivery speed of the advertisement, where the weight adjusting coefficient $\alpha$ may be adjusted according to the following formula:

$$\alpha = \begin{cases} \alpha \times \beta^{+}, & \text{if under delivery} \\ \alpha \times \beta^{-}, & \text{if over delivery} \end{cases}$$

where $1 \le \alpha \le 5$, $\beta^{+}=1.05$, $\beta^{-}=0.95$, an initial value of $\alpha$ is set to 1, and $\alpha$ is set to be adjusted once every minute. The values of the foregoing parameters and an interval time for adjusting $\alpha$ are an optional embodiment, but it does not represent that the values of the parameters and the interval time for adjusting $\alpha$ have only the foregoing one value.

Step S408. A bidding and sequencing module adjusts a score of the advertisement according to the weight adjusting coefficient $\alpha$, where the score of the advertisement is the correlation parameter of the media file in the foregoing embodiments of the present invention, and a specific adjusting manner may be according to the following formula:

$$\mathrm{score}(u, ad) = \mathrm{score}(u, ad) \times \alpha$$

A contract advertisement quantity guarantee problem in an advertisement delivery process of the preferred embodiment may be jointly implemented by using the scheduling system and the weight adjusting module. The scheduling system gives a volume that is of each contract advertisement and that needs to be exposed every day. The weight adjusting module determines the current delivery speed of the advertisement by using the exposure opportunity curve of the advertisement. The weight adjusting module correspondingly increases or decreases adjusting of the score of the contract advertisement to control the delivery speed of the advertisement. Specifically, the weight adjusting module compares the actual delivery volume calculated in real time according to the advertisement with the current target delivery

volume calculated according to the exposure opportunity curve, to calculate the weight adjusting coefficient α, where the score of the advertisement is adjusted according to the value of the weight adjusting coefficient α.

In a preferred embodiment of the present invention, quantity guarantee is performed on the contract advertisement by using the weight adjusting manner. Compared with the existing contract advertisement quantity guarantee manner, the preferred embodiment can help an advertiser to maximize the efficiency. In the advertisement quantity guarantee manner, correlations between current users and current advertisements are not distinguished, that is, the advertisement is not selectively exposed to users with a high correlation on the premise of quantity guarantee. In the existing quantity guarantee manner, advertisement delivery is controlled by using a possibility manner when an exposure flow is full, that is, the advertisement is returned at a certain possibility. In such a random manner, the correlation between the current user and the advertisement is not considered. Different from the existing technology, the weight adjusting manner is used in the preferred embodiment. When a network flow is full, and the advertisement delivery is excessively fast, the value of the weight adjusting coefficient α of the advertisement is reduced; and when the advertisement delivery is excessively slow, the value of the weight adjusting coefficient α of the advertisement is increased, so that if the user has a high score for the advertisement, the advertisement may still win exposure of the user. However, for a user has a low score for the advertisement, the advertisement is not exposed, so that it can be ensured that the advertisement wins a user with a higher correlation to the advertisement, and releases a user with a lower correlation, so as to maximize the efficiency of the advertiser.

It should be noted that, for ease of description, the foregoing method embodiments are described as a series of action combinations. However, a person skilled in the art should understand that the present disclosure is not limited to the described sequence of the actions, because some steps may be performed in another sequence or performed at the same time according to the present disclosure. In addition, a person skilled in the art should also know that all the embodiments described in this specification are preferred embodiments, and the related actions and modules are not necessarily required in the present disclosure.

Based on the foregoing descriptions of the embodiments, a person skilled in the art may clearly understand that the method according to the foregoing embodiment may be implemented by software in addition to necessary universal hardware or certainly by hardware, but in most cases, the former one is the better implementation. Based on such an understanding, the technical solutions of the present disclosure essentially or the part contributing to the existing technology may be implemented in a form of a software product. The computer software product is stored in a storage medium (such as a ROM/RAM, a magnetic disk, or an optical disc), and includes several instructions for instructing a terminal device (which may be a mobile phone, a personal computer, a server, a network device, or the like) to perform the methods described in the embodiments of the present invention.

Embodiment 2

According to this embodiment of the present invention, a media file delivery apparatus that is configured to implement the foregoing media file delivery method is further provided. FIG. 5 is a schematic diagram of an optional media file delivery apparatus according to an embodiment of the present invention. As shown in FIG. 5, the apparatus may include:

an obtaining module 22, configured to obtain a target delivery volume and an actual delivery volume of a media file; a comparison module 24, configured to compare the target delivery volume with the actual delivery volume to obtain a comparison result; an adjusting module 26, configured to adjust a correlation parameter of the media file according to comparison result, wherein the correlation parameter indicates a correlation between the media file and a delivery object of the media file; and a delivery module 28, configured to deliver the media file, wherein a delivery sequence of the media file is determined according to the correlation parameter.

It should be noted that, the obtaining module 22 in this embodiment may be configured to perform step S202 in Embodiment 1 of the present application, the comparison module 24 in this embodiment may be configured to perform step S204 in Embodiment 1 of the present application, the adjusting module 26 in this embodiment may be configured to perform step S206 in Embodiment 1 of the present application, and the delivery module 28 in this embodiment may be configured to perform step S208 in Embodiment 1 of the present application.

Herein, it should be noted that, the examples and application scenarios implemented by the foregoing modules and corresponding steps are the same, but are not limited to the content disclosed in the foregoing Embodiment 1. It should be noted that, the foregoing modules may run in the hardware environment shown in FIG. 1 as a part of the apparatus, may be implemented by using software, or may be implemented by using hardware. The hardware environment includes a network environment.

The foregoing modules may be used to solve a technical problem of a related technology that the media file may be delivered to a delivery object with a relatively low correlation in order to ensure an exposure volume of the media file, and achieve a technical effect of improving the delivery precision of the media file to further improve the delivery efficiency of the media file.

In the technical solution provided by the obtaining module 22, this embodiment of the present invention does not specifically limit the type of the media file, and the media file may be an advertisement, an audio file, a video file, or the like. The media file may be a file to be delivered, the target delivery volume of the media file is the quantity of media files to be delivered that is predetermined with the delivery object. The actual delivery volume of the media file is the quantity of media files actually delivered to the delivery object. Herein, it should be noted that, the delivery object of the media file may be a web page user, an application user, or the like. This embodiment of the present invention does not limit the type of the delivery object of the media file.

It should be noted that, the target delivery volume and the actual delivery volume of the media file refer to the target delivery volume and the actual delivery volume of the media file from a delivery start time to a current time. The actual delivery volume of the media file to the current time may be recorded by using a counter. Each time the media file is delivered, the counter is added by 1, and the actual delivery volume of the media file to the current time is a count vale of the counter. It should be noted that, the foregoing manner of obtaining the actual delivery volume of the media file to the current time is only an optional embodiment of the embodiments of the present invention. In this embodiment of the present invention, the actual delivery volume of the media file to the current time may also be obtained by using another manner. Herein, no example is provided again for description.

As an optional embodiment, the target delivery volume of the media file to the current time may be determined according to an exposure opportunity curve of the media file. It should be noted that, the exposure opportunity curve is the counted quantity, distributed with time, of media files requested by a user when the user comes online. A media file scheduling system may provide media file scheduling information. The media file scheduling information may include the following information: a delivery start time of the media file, a delivery end time of the media file, and a delivery volume of the media file corresponding to each time scale. The target delivery volume of the media file to the current time may be calculated according to the exposure opportunity curve of the media file and according to the following formula:

$$paced_\exp o = \frac{\int_{t_{start}}^{t_{curr}} c(t)dt}{\int_{t_{start}}^{t_{end}} c(t)dt} \times \exp o_num$$

where $c(t)$ is an exposure opportunity curve of the media file, $t_{start}$ is a delivery start time of the media file, $t_{end}$ is a delivery end time of the media file, $t_{curr}$ is a current time, $expo_num$ is a total delivery volume of the media file, and $paced_expo$ is the target delivery volume of the media file from the delivery start time to the current time.

It should be noted that, the foregoing manner of obtaining the target delivery volume of the media file to the current time is only an optional embodiment of the embodiments of the present invention. In this embodiment of the present invention, the target delivery volume of the media file to the current time may also be obtained by using another manner. Herein, no example is provided again for description. In the optional embodiment, the target delivery volume of the media file to the current time is obtained by using the exposure opportunity curve of the media file. Compared with another obtaining manner, the exposure opportunity curve obtained according to pull by a user is more convenient, and the exposure opportunity curve can accurately reflect a delivery process of the media file. Therefore, obtaining the target delivery volume of the media file to the current time by using the exposure opportunity curve is more convenient and effective, and the accuracy of the obtained target delivery volume can be ensured.

In this embodiment of the present invention, the manner of obtaining the target delivery volume and the actual delivery volume of the media file is not specifically limited provided that a variation manner and a replacement manner of obtaining the target delivery volume and the actual delivery volume of the media file to the current time fall within the protection scope of the present disclosure.

In the technical solution provided by the comparison module 24, after the target delivery volume and the actual delivery volume of the media file to the current time are obtained by using the obtaining module 22, in this embodiment of the present invention, the obtained target delivery volume may be compared with the obtained actual delivery volume, to compare a magnitude relationship between the target delivery volume and the actual delivery volume to obtain a comparison result. It should be noted that, the comparison result obtained by comparing the target delivery volume with the actual delivery volume may include the following several cases: The actual delivery volume is less than the target delivery volume; the actual delivery volume is greater than the target delivery volume; and the actual delivery volume is equal to the target delivery volume. The foregoing three cases may reflect the delivery speed of the media file. Specifically, when the actual delivery volume is less than the target delivery volume, it indicates that the delivery speed of the media file is excessively slow; when the actual delivery volume is greater than the target delivery volume, it indicates that the delivery speed of the media file is excessively fast; and when the actual delivery volume is equal to the target delivery

volume, it indicates that the delivery speed of the media file is suitable, and when the media file is delivered according to the delivery speed, a total volume of predetermined media files to be delivered may be completed in a time period from the delivery start time to the delivery end time. By comparing the actual delivery volume with the target delivery volume, the delivery speed of the media file can be controlled according to the comparison result.

Optionally, the comparison result obtained by comparing the target delivery volume with the actual delivery volume may further include a difference value between the actual delivery volume and the target delivery volume. That is, when the actual delivery volume is less than the target delivery volume, the actual delivery volume is less than the value of the target delivery volume; and when the actual delivery volume is greater than the target delivery volume, the actual delivery volume is greater than the value of the target delivery volume. By comparing the difference value between the actual delivery volume and the target delivery volume, the delivery speed of the media file can be adjusted more accurately.

In the technical solution provided by the adjusting module 26, the comparison result obtained by comparing the target delivery volume with the actual delivery volume of the media file may affect the correlation between the media file and the delivery object of the media file. The correlation between the media file and the delivery object of the media file may be directly indicated by the correlation parameter of the media file. A larger correlation parameter of the media file indicates a higher correlation between the media file and the delivery object; and a smaller correlation parameter of the media file indicates a lower correlation between the media file and the delivery object. It should be noted that, correlations between multiple different media files and a same delivery object may be different, and correlations between a same media file and different delivery objects may be different. The correlation between the media file and the delivery object of the media file may affect the delivery sequence of the media file, and a delivery sequence of a media file with a higher correlation to the delivery object has a higher priority than that of a media file with a lower correlation to the delivery object. It should be noted that, a same media file may be delivered to a same delivery object. The number of delivery times may be set according to an actual application scenario; or multiple different media files may be delivered to a same delivery object, and correlations between these media files and the delivery object are different. That is, correlation parameters of the media files are different, and correspondingly, priorities of delivery sequences for delivering the media files to the delivery object are different.

For example, the delivery object is user A, and media files delivery to user A are separately advertisement 1, advertisement 2, and advertisement 3. If a descending sequence of correlations between the advertisements and user A is advertisement 1, advertisement 2, and advertisement 3, correspondingly, a descending priority of a delivery sequence for delivering advertisements to user A is advertisement 1, advertisement 2, and advertisement 3.

The comparison result between the actual delivery volume and the target delivery volume of the media file may reflect the correlation between the media file and the delivery object. Specifically, when the actual delivery volume of the media file is less than the target delivery volume, if the media file may win exposure of the delivery object, it indicates that the correlation between the media file and the delivery object is relatively high; and when the actual delivery volume of the media file is greater than the target delivery volume, if the media file cannot win exposure of the delivery object, it indicates that the correlation between the media file and the delivery object is relatively low.

In this embodiment of the present invention, the correlation parameter of the media file is adjusted according to the comparison result between the target delivery volume and the actual delivery volume of the media file, so as to adjust the correlation between the media file and the delivery object to further adjust the delivery sequence of the media file.

As an optional embodiment, FIG. 6 is a schematic diagram of another optional media file delivery apparatus according to an embodiment of the present invention. As shown in FIG. 6, the adjusting module 26 may include: an increasing module 261, configured to increase a value of the correlation parameter when the comparison result indicates that the actual delivery volume is less than the target delivery volume, wherein a delivery sequence determined by the correlation parameter before the value is increased is later than a delivery sequence determined by the correlation parameter after the value is increased; and a decreasing module 263, configured to decrease a value of the correlation parameter when the comparison result indicates that the actual delivery volume is greater than the target delivery volume, wherein a delivery sequence determined by the correlation parameter before the value is decreased is earlier than a delivery sequence determined by the correlation parameter after the value is decreased.

It should be noted that, the increasing module 261 in this embodiment may be configured to perform step S2061 in Embodiment 1 of the present application, and the decreasing module 263 in this embodiment may be configured to perform step S2063 in Embodiment 1 of the present application.

It should be noted that, the comparison result obtained by comparing the target delivery volume with the actual delivery volume of the media file may include: The actual delivery volume is less than or greater than the target delivery volume. When actual delivery volume is less than the target delivery volume (for example, the actual delivery volume is less than the target delivery volume by a first preset threshold), in this embodiment of the present invention, the correlation between the media file and the delivery object may be improved, and it is more likely that the media file is delivered. That is, when the correlation between the media file and the delivery object is relatively high, the media file needs to be preferentially delivered. In this case, in this embodiment of the present invention, the value of the correlation parameter

of the media file may be increased to improve the priority of the delivery sequence of the media file, so that the delivery sequence corresponding to the correlation indicated after the value of the correlation parameter of the media file is increased is earlier than the delivery sequence corresponding to the correlation indicated before the value is increased. When the actual delivery volume is greater than the target delivery volume (for example, the actual delivery volume is greater than the target delivery volume by a second preset threshold, where both the first preset threshold and the second preset threshold are greater than 0, and the first preset threshold and the second preset threshold may be the same or different), it indicates that the media file cannot be exposed by the delivery object. That is, when the correlation between the media file and the delivery object is relatively low, the media file needs to be delivered in a later sequence. In this case, in this embodiment of the present invention, the value of the correlation parameter of the media file may be decreased to reduce the priority of the delivery sequence of the media file, so that the delivery sequence corresponding to the correlation indicated after the value of the correlation parameter of the media file is decreased is later than the delivery sequence corresponding to the correlation indicated before the value is decreased. It should be noted that, this embodiment of the present invention does not specifically limit the first preset threshold and the second preset threshold, and the first preset threshold and the second preset threshold may be set according to an actual requirement. Further, it should be noted that, a difference value by which the actual delivery volume of the media file is less than the target delivery volume may be the same as or may be different from a difference value by which the actual delivery volume is greater than the target delivery volume. This is not specifically limited herein.

In this embodiment of the present invention, the value of the correlation parameter of the media file is adjusted according to the comparison result between the actual delivery volume and the target delivery volume of the media file, to adjust the delivery sequence of the media file, so that a media file with a higher correlation to the delivery object may be preferentially delivered, and a media file with a lower correlation to the delivery object may be delivered later, so as to achieve the effect of increasing an exposure rate of the media file to improve the delivery efficiency of the media file.

In the technical solution provided by the delivery module 28, the correlation parameter of the media file may be used to indicate the correlation between the media file and the delivery object. In this embodiment of the present invention, preferably, the delivery sequence of the media file with a higher correlation to the delivery object is put ahead, the delivery sequence of the media file with a lower correlation to the delivery object is put forward, and the media files are delivered according to the adjusted delivery sequences. It should be noted that, there may be one or more media files delivered to a delivery object. When multiple media files are delivery to a delivery object, a delivery sequence of the media files may be adjusted according to values of correlation parameters of the media files, so that a media file with a larger value of the correlation parameter is preferentially delivered, to increase the exposure rate of the delivery object for the media file to improve the delivery efficiency of the media file.

Optionally, in this embodiment of the present invention, when the media file is delivered to the delivery object according to the delivery sequence corresponding to the correlation indicated by a related parameter of the media file, a delivery manner may be selected according to the type of the delivery object. This embodiment of the present invention does not specifically limit the type of the delivery object, which may be a web page user, an application user, or the like. This embodiment of the present invention also does not specifically limit the delivery manner for delivering the media file to the delivery object. The media file may be automatically displayed in a pop-up form, or a user may be prompted to view the delivered media file in a message prompt form, or the delivered media file may be displayed when an application starts. The delivery manner of the media file may be set or adjusted according to the type of the media file, the type of the delivery object, and the type of a terminal in which the delivery object is located. Herein, no example is provided again for description.

As an optional embodiment, FIG. 7 is a schematic diagram of still another optional media file delivery apparatus according to an embodiment of the present invention. As shown in FIG. 7, the adjusting module 26 may include: a first adjusting submodule 262, configured to adjust a delivery control parameter according to the comparison result to obtain an adjusted delivery control parameter, wherein the comparison result is used for increasing or decreasing a value of the delivery control parameter by a first preset proportion; and a second adjusting submodule 264, configured to adjust a correlation parameter of the media file according to the adjusted delivery correlation parameter, wherein the adjusted delivery correlation parameter is used for increasing or decreasing a value of the correlation parameter by a second preset proportion.

It should be noted that, the first adjusting submodule 262 in this embodiment may be configured to perform step S2062 in Embodiment 1 of the present application, and the second adjusting submodule 264 in this embodiment may be configured to perform step S2064 in Embodiment 1 of the present application.

In the technical solution provided by the first adjusting submodule 262, the delivery control parameter may be used to indicate a delivery speed of the media file. The value of the delivery control parameter may be adjusted according to the comparison result between the actual delivery volume and the target delivery volume of the media file. Specifically, when the actual delivery volume of the media file is less than the target delivery volume, it indicates that the delivery speed of the media file at this time is excessively slow, and the value of the delivery control parameter needs to be increased; and when the actual delivery volume of the media file is greater than the target delivery volume, it indicate

that the delivery speed of the media file at this time is excessively fast, and the value of the delivery control parameter needs to be decreased. Optionally, the increase or decrease amplitude of the value of the delivery control parameter may be determined according to the difference value between the actual delivery volume and the target delivery volume of the media file. In this embodiment of the present invention, optionally, the value of the delivery control parameter is increased or decreased by a first preset proportion. The amplitude of the first preset proportion may be determined according to the difference value between the actual delivery volume and the target delivery volume of the media file. For example, the first preset proportion may be 0.5%. It should be noted that, the proportions by which the value of the delivery control parameter is increased and decreased may be the same, and are a first preset proportion, or may be different. The proportions by which the value of the delivery control parameter may be specifically set according to an actual situation, and are not specifically limited in this embodiment of the present invention.

In the technical solution provided by the second adjusting submodule 264, in the present disclosure, the correlation parameter of the media file may be adjusted according to the adjusted delivery control parameter. When the delivery control parameter is increased by the first preset proportion, the value of the correlation parameter of the media file may be correspondingly increased by the second preset proportion; and when the delivery control parameter is decreased by the first preset proportion, the value of the correlation parameter of the media file may be correspondingly decreased by the second preset proportion. It should be noted that, the first preset proportion may be the same as or may be different from the second preset proportion. This embodiment of the present invention does not specifically limit the second preset proportion, which may be set or adjusted according to an actual situation.

It should be noted that, when the actual delivery volume of the media file is less than the target delivery volume, it indicates that the delivery speed of the media file is excessively slow, the media file may be exposed by the delivery object, and the correlation between the media file and the delivery object is relatively high. In this case, the value of the delivery control parameter needs to be increased, and the increased proportion may be the first preset proportion, so that the value of the correlation parameter of the media file is increased, and the increased proportion may be the second preset proportion, so that it may be ensured that the media file can be preferentially delivered to the delivery object, to improve the efficiency of the media file. On the contrary, when the actual delivery volume of the media file is greater than the target delivery volume, it indicates that the delivery speed of the media file is excessively fast, the media file cannot be exposed by the delivery object, and the correlation between the media file and the delivery object is relatively low. In this case, the value of the delivery control parameter needs to be decreased, and the decreased proportion may be the first preset proportion, so that the value of the correlation parameter of the media file is decreased, and the decreased proportion may be the second preset proportion, so that it may be ensured that the delivery sequence of the media file with a lower correlation to the delivery object is put forward, to ensure preferentially delivering the media file with a higher correlation to the delivery object and with the forward sequence, to further improve the efficiency of the media file.

As an optional embodiment, the correlation parameter of the media file may be adjusted according to the following formula:

$$\mathrm{score}(\mathrm{u},\mathrm{ad}) = \mathrm{score}(\mathrm{u},\mathrm{ad}) \times \alpha,$$

where score(u, ad) is the correlation parameter of the media file, and $\alpha$ is the delivery control parameter, which indicates a delivery speed of the media file, where

$$\alpha = \begin{cases} \alpha \times \beta^{+}, & \text{when the actual delivery volume is less than the target delivery volume} \\ \alpha \times \beta^{-}, & \text{when the actual delivery volume is greater than the target delivery volume} \end{cases},$$

where $\beta^{+}$ is a first coefficient, $\beta^{+}>1$, $\beta^{-}$ is a second coefficient, and $\beta^{-}<1$.

It should be noted that, an initial value of the delivery control parameter $\alpha$ may be 1, a change interval of $\alpha$ may be [1, 5], $\beta^{+}$ is a coefficient greater than 1 and the value may be 1.05, and $\beta^{-}$ may be a coefficient less than 1 and the value may be 0.95. It should be noted that, the values of the foregoing parameters are all an optional embodiment of the present invention. The values of the foregoing parameters may also be adjusted according to a situation. Herein, no example is provided again for description. When the actual delivery volume of the media file is less than the target delivery volume (for example, the actual delivery volume is less than the target delivery volume by the first preset threshold), the value of the delivery control parameter $\alpha$ may be increased by the first preset proportion, so that the correlation parameter score(u, ad) of the media file may also be increased by the second preset proportion. When the actual delivery volume of the media file is greater than the target delivery volume (for example, the actual delivery volume is greater than the target delivery volume by the second preset threshold), the value of the delivery control parameter

$\alpha$ may be decreased by the first preset proportion, so that the correlation parameter score(u, ad) of the media file may also be decreased by the second preset proportion.

It should be noted that, the foregoing manner of calculating the correlation parameter of the media file is only an optional embodiment of the embodiments of the present invention. In this embodiment of the present invention, the correlation parameter of the media file may also be calculated by using another manner. Herein, no example is provided again for description. In the optional embodiment, by calculating the correlation parameter of the media file, the priority of the delivery sequence of the media file may be adjusted according to the correlation parameter, so that a media file with a higher correlation to the delivery object is preferentially delivered, to achieve the effect of improving an exposure volume of multimedia, to further improve the delivery efficiency of the media file.

As an optional embodiment, FIG. 8 is a schematic diagram of yet another optional media file delivery apparatus according to an embodiment of the present invention. As shown in FIG. 8, the obtaining module 22 may include: a first obtaining submodule 222, configured to obtain the target delivery volume and the actual delivery volume of the media file at a preset interval; the comparison module 24 may include: a first comparison submodule 242, configured to compare the target delivery volume with the actual delivery volume at the preset interval; and the adjusting module 26 may include: a third adjusting submodule 266, configured to adjust the correlation parameter of the media file according to the comparison result at the preset interval.

It should be noted that, the first obtaining submodule 222 in this embodiment may be configured to perform step S2022 in Embodiment 1 of the present application, the first comparison submodule 242 in this embodiment may be configured to perform step S2042 in Embodiment 1 of the present application, and the third adjusting submodule 266 in this embodiment may be configured to perform step S2066 in Embodiment 1 of the present application.

It should be noted that, the preset time in the optional embodiment may be set or adjusted according to an actual situation. The preset time may be 1 minute, 30 seconds, or the like, and is not specifically limited herein. In the media file delivery method n the optional embodiment, the foregoing steps are performed at a preset interval, to adjust the correlation parameter of the media file at the preset interval, to achieve the effect of improving the accuracy of the correlation parameter of the media file, to improve the precision of adjusting the delivery sequence of the media file.

Herein, it should be noted that, the examples and application scenarios implemented by the foregoing modules and corresponding steps are the same, but are not limited to the content disclosed in the foregoing Embodiment 1. It should be noted that, the foregoing modules may run in the hardware environment shown in FIG. 1 as a part of the apparatus, may be implemented by using software, or may be implemented by using hardware. The hardware environment includes a network environment.

Embodiment 3

According to this embodiment of the present invention, a terminal configured to implement the foregoing media file delivery method is further provided.

FIG. 9 is a structural block diagram of a terminal according to an embodiment of the present invention. As shown in FIG. 9, the terminal may include: one or more (only one shown in the figure) processors 201, a memory 203, and a transmission apparatus 205. As shown in FIG. 9, the terminal may further include an input/output device 207.

The memory 203 may be configured to store a software program and a module, for example, a program instruction/module corresponding to a media file delivery method and apparatus in the embodiments of the present invention. The processor 201 performs various functional applications and data processing by running the software program and the module stored in the memory 203, that is, implementing the foregoing media file delivery method. The memory 203 may include a high-speed random memory, and may also include a nonvolatile memory such as one or more magnetic storage devices, a flash memory, or another nonvolatile solid-state memory. In some embodiments, the memory 203 may further include memories remotely disposed relative to the processor 201, and these remote memories may be connected to the terminal through a network. Instances of the network include, but are not limited to, the Internet, an intranet, a local area network, a mobile communications network, and a combination thereof.

The transmission apparatus 205 is configured to receive or send data through a network, and may also be configured to transmit data between the processor and the memory. Specific examples of the network may include a wired network and a wireless network. In an example, the transmission apparatus 205 includes a network interface controller (NIC) that may be connected to another network device and a router via a network cable, thereby communicating with the Internet or a local area network. In an example, the transmission apparatus 205 is a radio frequency (RF) module that is configured to communicate with the Internet in a wireless manner.

Specifically, the memory 203 is configured to store an application program.

The processor 201 may invoke the application program stored memory 203 by using the transmission apparatus 205, to perform the following steps: obtaining a target delivery volume and an actual delivery volume of a media file; comparing the target delivery volume with the actual delivery volume to obtain a comparison result; adjusting a correlation parameter of the media file according to comparison result, wherein the correlation parameter indicates a correlation

between the media file and a delivery object of the media file; and delivering the media file, wherein a delivery sequence of the media file is determined according to the correlation parameter.

The processor 201 is further configured to perform the following steps: increasing a value of the correlation parameter when the comparison result indicates that the actual delivery volume is less than the target delivery volume, wherein a delivery sequence determined by the correlation parameter before the value is increased is later than a delivery sequence determined by the correlation parameter after the value is increased; and decreasing a value of the correlation parameter when the comparison result indicates that the actual delivery volume is greater than the target delivery volume, wherein a delivery sequence determined by the correlation parameter before the value is decreased is earlier than a delivery sequence determined by the correlation parameter after the value is decreased.

The processor 201 is further configured to perform the following step: adjusting the correlation parameter of the media file according to the following formula: score(u, ad) = score(u, ad) $\times$ $\alpha$, where score(u, ad) is the correlation parameter of the media file, $\alpha$ is the delivery control parameter, which indicates a delivery speed of the media file, where $\alpha = \begin{cases} \alpha \times \beta^{+}, & \text{The actual delivery volume is less than the target delivery volume} \\ \alpha \times \beta^{-}, & \text{The actual delivery volume is greater than the target delivery volume} \end{cases}$, where $\beta^{+}$ is a first coefficient, $\beta^{+}>1$, $\beta^{-}$ is a second coefficient, and $\beta^{-}<1$.

The processor 201 is further configured to perform the following steps: obtaining the target delivery volume and the actual delivery volume of the media file at a preset interval; comparing the target delivery volume with the actual delivery volume at the preset interval; and adjusting the correlation parameter of the media file according to the comparison result at the preset interval.

The processor 201 is further configured to perform the following step: obtaining the target delivery volume of the media file according to the following formula: $paced_expo = \frac{\int_{t_{start}}^{t_{curr}} c(t)dt}{\int_{t_{start}}^{t_{end}} c(t)dt} \times expo_num$, where $c(t)$ is an exposure opportunity curve of the media file, $t_{start}$ is a delivery start time of the media file, $t_{end}$ is a delivery end time of the media file, $t_{curr}$ is a current time, $expo_num$ is a total volume of to-be delivered media files, and $paced_expo$ is the target delivery volume of the media file from the delivery start time to the current time.

This embodiment of the present invention provides a solution for media file delivery. The correlation parameter of the media file is adjusted according to the comparison result of the target delivery volume and the actual delivery volume of the media file, and the media file is delivered according to the correlation between the media file indicated by the correlation parameter and the delivery object. By virtue of the solution, the media file can be delivered to a delivery object with a relatively high correlation under the premise of ensuring an exposure volume of the media file. The embodiments achieve a technical effect of improving the delivery precision of the media file to further improve the delivery efficiency of the media file, and solve a technical problem of a related technology that the media file may be delivered to a delivery object with a relatively low correlation to ensure the exposure volume of the media file.

Optionally, for specific examples of this embodiment, reference may be made to the examples described in Embodiment 1 and Embodiment 2. Details are not described again in this embodiment.

A person of ordinary skill in the art may understand that, the structure shown in FIG. 9 is only schematic. The terminal may be a terminal device such as a smartphone (such as an Android mobile phone or an iOS mobile phone), a tablet computer, a palmtop computer, a mobile Internet device (MID), or a PAD. FIG. 9 does not limit the structure of the foregoing electronic apparatus. For example, the terminal may further include more or less components (such as a network interface and a display apparatus) than those shown in FIG. 9, or has a configuration different from that shown in FIG. 9.

A person of ordinary skill in the art may understand that all or a part of the steps of the methods of the foregoing embodiments may be implemented by a program instructing relevant hardware of the terminal device. The program may be stored in a computer readable storage medium. The storage medium may be a flash disk, a read-only memory (ROM), a random access memory (RAM), a magnetic disk, or an optical disc.

Embodiment 4

This embodiment of the present invention further provides a storage medium. Optionally, in this embodiment, the storage medium may be configured to execute program code in a media file delivery method.

Optionally, in this embodiment, the storage medium may be located on at least one of multiple network devices in the network shown in the foregoing embodiment.

Optionally, in this embodiment, the storage medium is configured to store program code used to perform the

following steps:

S1. Obtain a target delivery volume and an actual delivery volume of a media file.
S2. Compare the target delivery volume with the actual delivery volume to obtain a comparison result.
S3. Adjust a correlation parameter of the media file according to the comparison result, wherein the correlation parameter indicates a correlation between the media file and a delivery object of the media file.
S4. Deliver the media file, wherein a delivery sequence of the media file is determined according to the correlation parameter.

Optionally, the storage medium is further configured to store program code used to perform the following steps: increasing a value of the correlation parameter when the comparison result indicates that the actual delivery volume is less than the target delivery volume, wherein a delivery sequence determined by the correlation parameter before the value is increased is later than a delivery sequence determined by the correlation parameter after the value is increased; and decreasing a value of the correlation parameter when the comparison result indicates that the actual delivery volume is greater than the target delivery volume, wherein a delivery sequence determined by the correlation parameter before the value is decreased is earlier than a delivery sequence determined by the correlation parameter after the value is decreased.

Optionally, the storage medium is further configured to store program code used to perform the following steps: adjusting the correlation parameter of the media file according to the following formula: score(u, ad) = score(u, ad) $\times$ $\alpha$, where score(u, ad) is the correlation parameter of the media file, $\alpha$ is the delivery control parameter, which indicates a delivery speed of the media file, where

$$\alpha = \begin{cases} \alpha \times \beta^{+}, & \text{when the actual delivery volume is less than the target delivery volume} \\ \alpha \times \beta^{-}, & \text{when the actual delivery volume is greater than the target delivery volume} \end{cases}$$

where $\beta^{+}$ is a first coefficient, $\beta^{+}>1$, $\beta^{-}$ is a second coefficient, and $\beta^{-}<1$.

Optionally, the storage medium is further configured to store program code used to perform the following steps: obtaining the target delivery volume and the actual delivery volume of the media file at a preset interval; comparing the target delivery volume with the actual delivery volume at the preset interval; and adjusting the correlation parameter of the media file according to the comparison result at the preset interval.

Optionally, the storage medium is further configured to store program code used to perform the following step: obtaining the target delivery volume of the media file according to the following formula:

$$paced_expo = \frac{\int_{t_{start}}^{t_{curr}} c(t)dt}{\int_{t_{start}}^{t_{end}} c(t)dt} \times expo_num ,$$

where $c(t)$ is an exposure opportunity curve of the media file, $t_{start}$ is a delivery start time of the media file, $t_{end}$ is a delivery end time of the media file, $t_{curr}$ is a current time, $expo_num$ is a total delivery volume of the media file, and $paced_expo$ is a target delivery volume of the media file from the delivery start time to the current time.

Optionally, for specific examples of this embodiment, reference may be made to the examples described in Embodiment 1 and Embodiment 2. Details are not described again in this embodiment.

Optionally, in this embodiment, the storage medium may include but not limited to various media that may store program code, such as a USB flash disk, a read-only memory (ROM), a random access memory (RAM), a removable hard disk, a magnetic disk, or an optical disc.

The sequence numbers of the foregoing embodiments of the present invention are merely for description purpose but do not indicate the preference of the embodiments.

When the units integrated in the foregoing embodiments are implemented in a form of a software functional module and sold or used as an independent product, the units may be stored in a computer-readable storage medium. Based on such an understanding, the technical solutions of the present disclosure essentially, or the part contributing to the prior art, or all or some of the technical solutions may be implemented in a form of a software product. The computer software product is stored in a storage medium and includes several instructions for instructing one or more computer devices (which may be a personal computer, a server, a network device, or the like) to perform all or some of the steps of the methods described in the embodiments of the present invention.

In the foregoing embodiments of the present invention, descriptions of the embodiments have different emphases, and for parts that are not described in detail in one embodiment, reference may be made to the relevant description of the other embodiments.

In the several embodiments provided in the present application, it should be understood that the disclosed client may be implemented in other manners. The described apparatus embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and the parts displayed as units may or may not be physical units, may be located in one position, or may be distributed on a plurality of network units. A part of or all of the units may be selected according to actual needs to achieve the objectives of the solutions of the embodiments.

In addition, functional units in the embodiments of the present invention may be integrated into one processing unit, or each of the units may exist alone physically, or two or more units may be integrated into one unit. The integrated unit may be implemented in a form of hardware, or may be implemented in a form of a software functional unit.

The foregoing descriptions are merely preferred embodiments of the present invention, and it should be noted that, a person of ordinary skill in the art may make various improvements and refinements without departing from the principle of the present disclosure. All such modifications and refinements should also fall within the protection scope of the present disclosure.

## Claims

1. A media file delivery method, wherein the method comprises:

   obtaining a target delivery volume and an actual delivery volume of a media file;
   comparing the target delivery volume with the actual delivery volume to obtain a comparison result;
   adjusting a correlation parameter of the media file according to the comparison result, wherein the correlation parameter indicates a correlation between the media file and a delivery object of the media file; and
   delivering the media file, wherein a delivery sequence of the media file is determined according to the correlation parameter.

2. The method as claimed in claim 1, wherein adjusting a correlation parameter of the media file according to the comparison result comprises:
   increasing a value of the correlation parameter when the comparison result indicates that the actual delivery volume is less than the target delivery volume, wherein a delivery sequence determined by the correlation parameter before the value is increased is later than a delivery sequence determined by the correlation parameter after the value is increased.

3. The method as claimed in claim 1, wherein adjusting a correlation parameter of the media file according to the comparison result comprises:
   decreasing a value of the correlation parameter when the comparison result indicates that the actual delivery volume is greater than the target delivery volume, wherein a delivery sequence determined by the correlation parameter before the value is decreased is earlier than a delivery sequence determined by the correlation parameter after the value is decreased.

4. The method as claimed in claim 1, wherein adjusting a correlation parameter of the media file according to the comparison result comprises:

   adjusting a delivery control parameter according to the comparison result to obtain an adjusted delivery control parameter, wherein the comparison result is used for increasing or decreasing a value of the delivery control parameter by a first preset proportion; and
   adjusting the correlation parameter of the media file according to the adjusted delivery correlation parameter, wherein the adjusted delivery correlation parameter is used for increasing or decreasing a value of the correlation parameter by a second preset proportion.

**5.** The method as claimed in claim 4, wherein the correlation parameter of the media file is adjusted according to the following formula:

$$\mathrm{score}(\mathrm{u},\mathrm{ad}) = \mathrm{score}(\mathrm{u},\mathrm{ad}) \times \alpha$$

where score(u, ad) is the correlation parameter of the media file, and $\alpha$ is the delivery control parameter, which indicates a delivery speed of the media file, wherein

$$\alpha = \begin{cases} \alpha \times \beta^{+}, & \text{when the actual delivery volume is less than the target delivery volume} \\ \alpha \times \beta^{-}, & \text{when the actual delivery volume is greater than the target delivery volume} \end{cases}$$

where $\beta^{+}$ is a first coefficient, $\beta^{+}>1$, $\beta^{-}$ is a second coefficient, and $\beta^{-}<1$.

**6.** The method as claimed in any one of claims 1 to 5, wherein
obtaining a target delivery volume and an actual delivery volume of a media file comprises: obtaining the target delivery volume and the actual delivery volume of the media file at a preset interval;
comparing the target delivery volume with the actual delivery volume to obtain a comparison result comprises: comparing the target delivery volume with the actual delivery volume at the preset interval; and
adjusting a correlation parameter of the media file according to the comparison result comprises: adjusting the correlation parameter of the media file according to the comparison result at the preset interval.

**7.** The method as claimed in any one of claims 1 to 5, wherein the target delivery volume of the media file is obtained according to the following formula:

$$paced_\mathrm{exp}o = \frac{\int_{t_{start}}^{t_{curr}} c(t)dt}{\int_{t_{start}}^{t_{end}} c(t)dt} \times \mathrm{exp}o_num$$

where $c(t)$ is an exposure opportunity curve of the media file, $t_{start}$ is a delivery start time of the media file, $t_{end}$ is a delivery end time of the media file, $t_{curr}$ is a current time, expo_num is a total delivery volume of the media file, and paced_expo is the target delivery volume of the media file from the delivery start time to the current time.

**8.** A media file delivery apparatus, wherein the apparatus comprises:

an obtaining module, configured to obtain a target delivery volume and an actual delivery volume of a media file;
a comparison module, configured to compare the target delivery volume with the actual delivery volume to obtain a comparison result;
an adjusting module, configured to adjust a correlation parameter of the media file according to the comparison result, wherein the correlation parameter indicates a correlation between the media file and a delivery object of the media file; and
a delivery module, configured to deliver the media file, wherein a delivery sequence of the media file is determined according to the correlation parameter.

**9.** The apparatus as claimed in claim 8, wherein the adjusting module comprises:
an increasing module, configured to increase a value of the correlation parameter when the comparison result indicates that the actual delivery volume is less than the target delivery volume, wherein a delivery sequence determined by the correlation parameter before the value is increased is later than a delivery sequence determined by the correlation parameter after the value is increased.

**10.** The apparatus as claimed in claim 8, wherein the adjusting module comprises:
a decreasing module, configured to decrease a value of the correlation parameter when the comparison result

indicates that the actual delivery volume is greater than the target delivery volume, wherein a delivery sequence determined by the correlation parameter before the value is decreased is earlier than a delivery sequence determined by the correlation parameter after the value is decreased.

**11.** The apparatus as claimed in claim 8, wherein the adjusting module comprises:

a first adjusting submodule, configured to adjust a delivery control parameter according to the comparison result to obtain an adjusted delivery control parameter, wherein the comparison result is used for increasing or decreasing a value of the delivery control parameter by a first preset proportion; and
a second adjusting submodule, configured to adjust the correlation parameter of the media file according to the adjusted delivery correlation parameter, wherein the adjusted delivery correlation parameter is used for increasing or decreasing a value of the correlation parameter by a second preset proportion.

**12.** The apparatus as claimed in claim 11, wherein the correlation parameter of the media file is adjusted according to the following formula:

$$\mathrm{score}(\mathrm{u}, \mathrm{ad}) = \mathrm{score}(\mathrm{u}, \mathrm{ad}) \times \alpha$$

where score(u, ad) is the correlation parameter of the media file, and $\alpha$ is the delivery control parameter, which indicates a delivery speed of the media file, wherein

$$\alpha = \begin{cases} \alpha \times \beta^{+}, & \text{when the actual delivery volume is less than the target delivery volume} \\ \alpha \times \beta^{-}, & \text{when the actual delivery volume is greater than the target delivery volume} \end{cases}$$

where $\beta^{+}$ is a first coefficient, $\beta^{+}>1$, $\beta^{-}$ is a second coefficient, and $\beta^{-}<1$.

**13.** The apparatus as claimed in any one of claims 8 to 12, wherein
the obtaining module comprises: a first obtaining submodule, configured to obtain the target delivery volume and the actual delivery volume of the media file at a preset interval;
the comparison module comprises: a first comparison submodule, configured to compare the target delivery volume with the actual delivery volume at the preset interval; and
the adjusting module comprises: a third adjusting submodule, configured to adjust the correlation parameter of the media file according to the comparison result at the preset interval.

**14.** The apparatus as claimed in any one of claims 8 to 12, wherein the target delivery volume of the media file is obtained by using the following formula:

$$paced_\exp o = \frac{\int_{t_{start}}^{t_{curr}} c(t)dt}{\int_{t_{start}}^{t_{end}} c(t)dt} \times \exp o_num$$

where $c(t)$ is an exposure opportunity curve of the media file, $t_{start}$ is a delivery start time of the media file, $t_{end}$ is a delivery end time of the media file, $t_{curr}$ is a current time, expo*_num* is a total delivery volume of the media file, and *paced_*expo is the target delivery volume of the media file from the delivery start time to the current time.

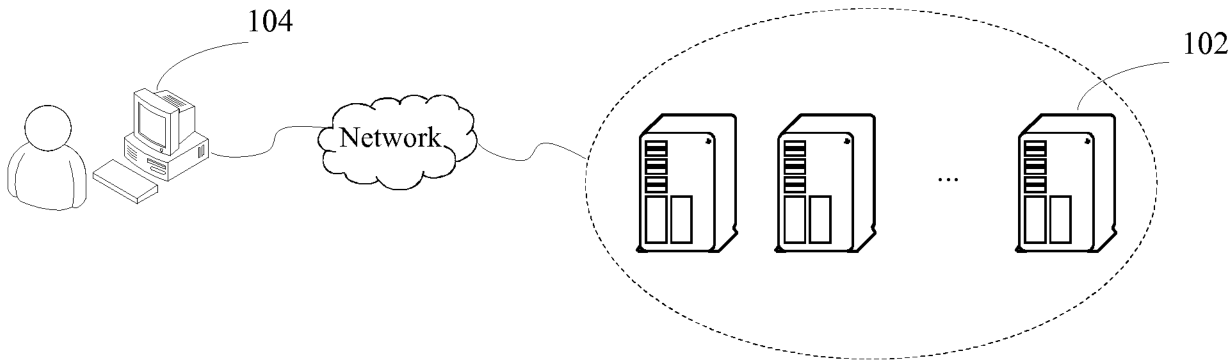
104
102
Network
...

FIG. 1

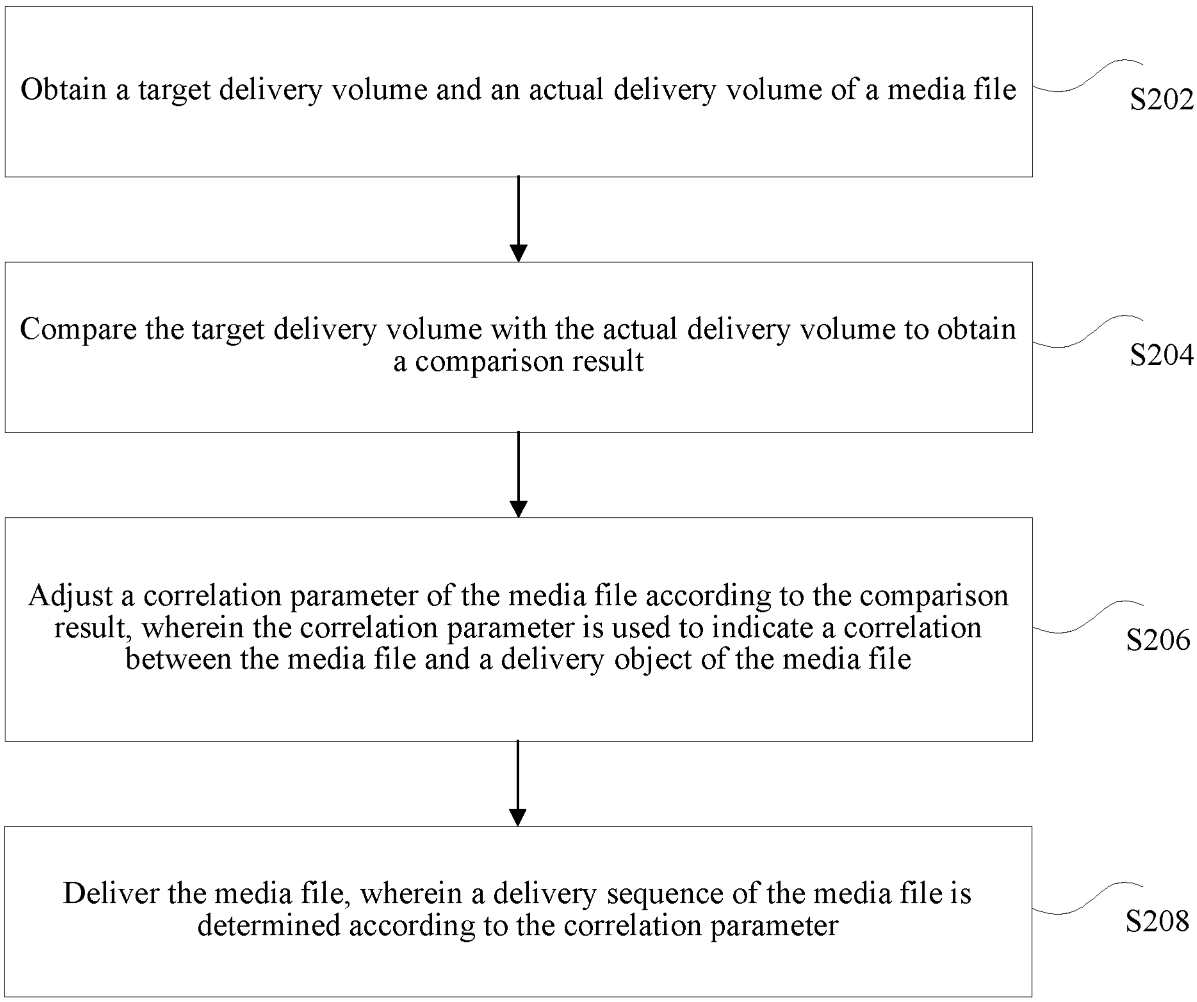
Obtain a target delivery volume and an actual delivery volume of a media file
S202
Compare the target delivery volume with the actual delivery volume to obtain a comparison result
S204
Adjust a correlation parameter of the media file according to the comparison result, wherein the correlation parameter is used to indicate a correlation between the media file and a delivery object of the media file
S206
Deliver the media file, wherein a delivery sequence of the media file is determined according to the correlation parameter
S208

FIG. 2

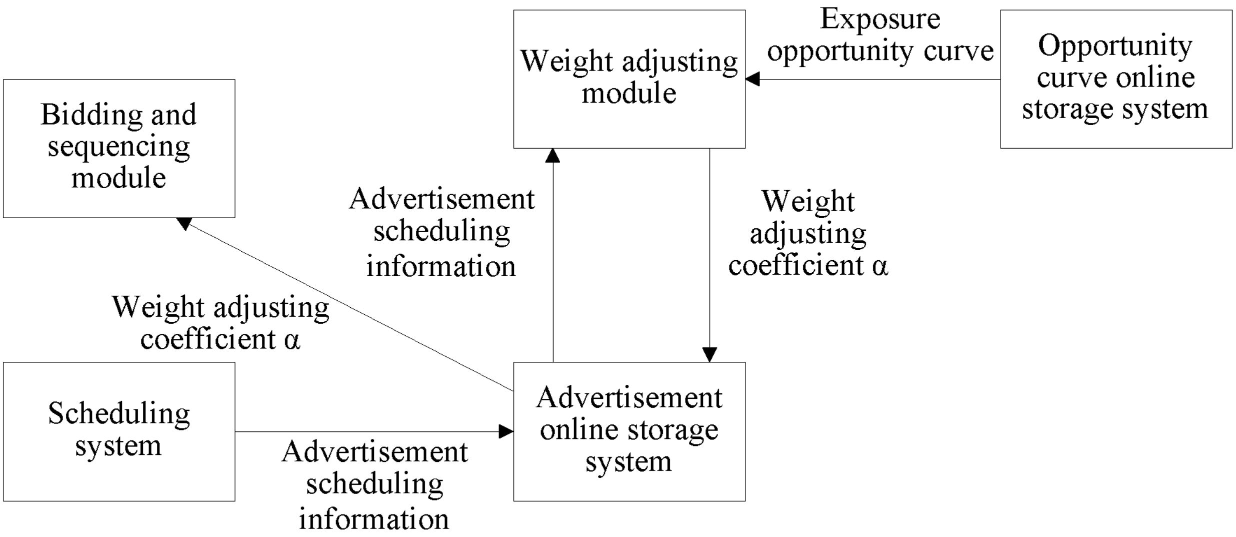
Weight adjusting module
Exposure opportunity curve
Opportunity curve online storage system
Bidding and sequencing module
Advertisement scheduling information
Weight adjusting coefficient α
Weight adjusting coefficient α
Scheduling system
Advertisement online storage system
Advertisement scheduling information

FIG. 3

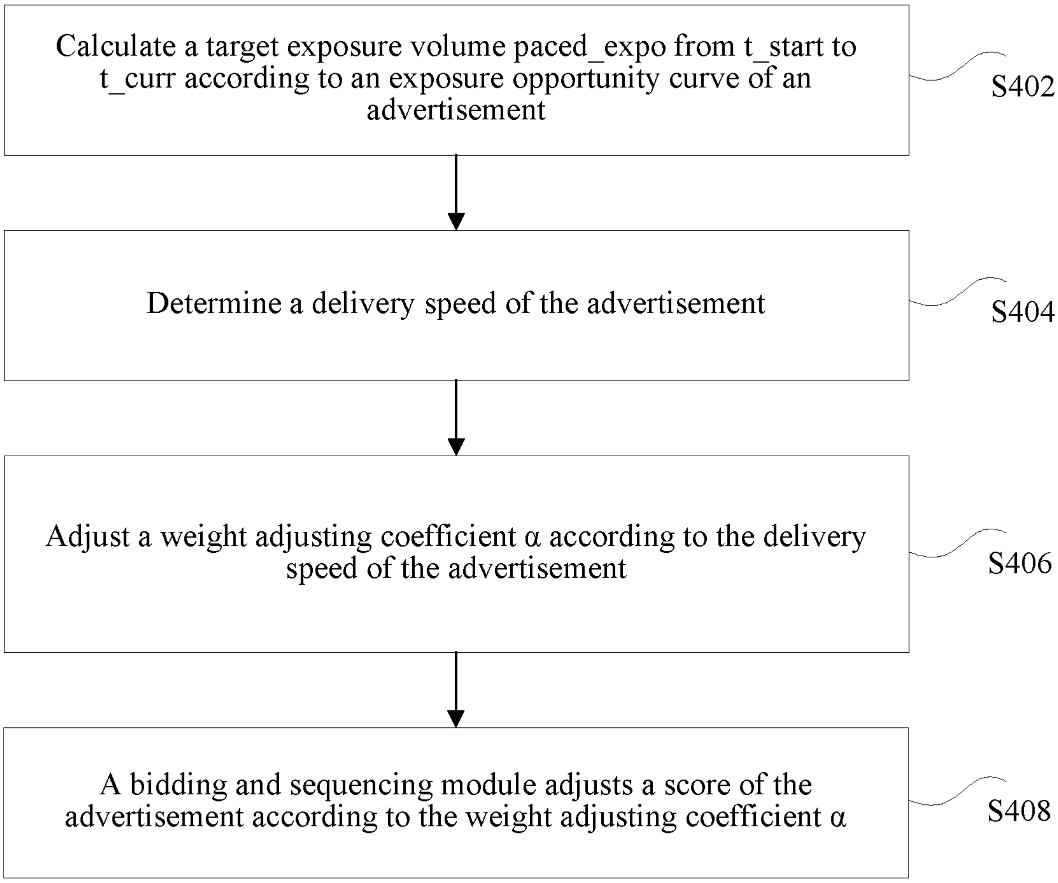
Calculate a target exposure volume paced_expo from t_start to t_curr according to an exposure opportunity curve of an advertisement
S402
Determine a delivery speed of the advertisement
S404
Adjust a weight adjusting coefficient α according to the delivery speed of the advertisement
S406
A bidding and sequencing module adjusts a score of the advertisement according to the weight adjusting coefficient α
S408

FIG. 4

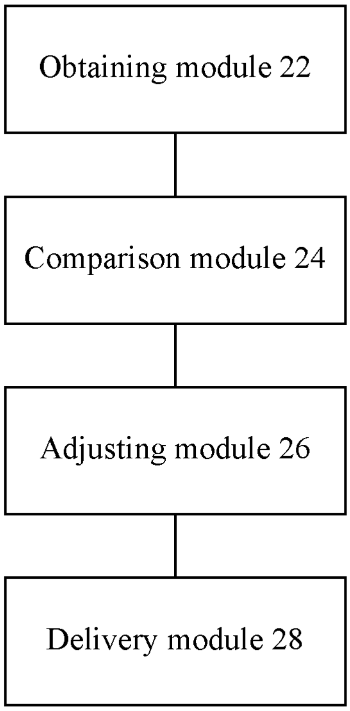
Obtaining module 22
Comparison module 24
Adjusting module 26
Delivery module 28

FIG. 5

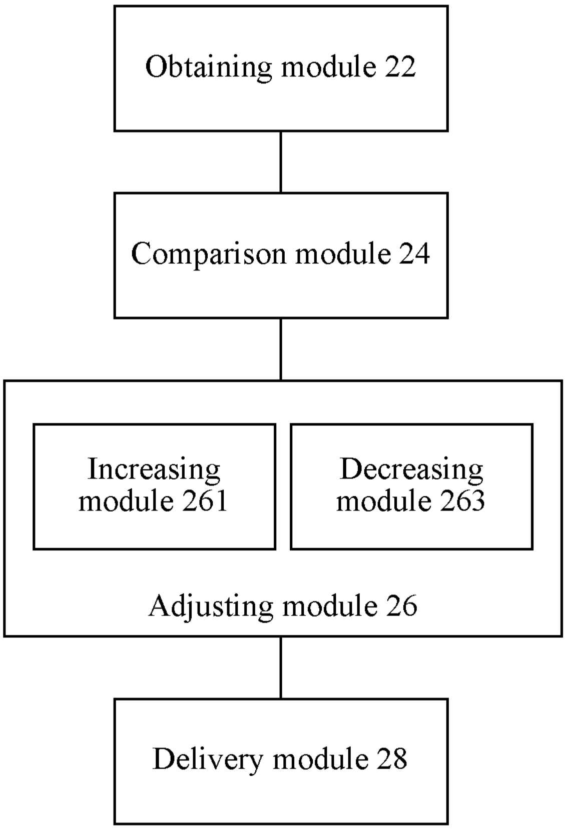
Obtaining module 22
Comparison module 24
Increasing module 261
Decreasing module 263
Adjusting module 26
Delivery module 28

FIG. 6

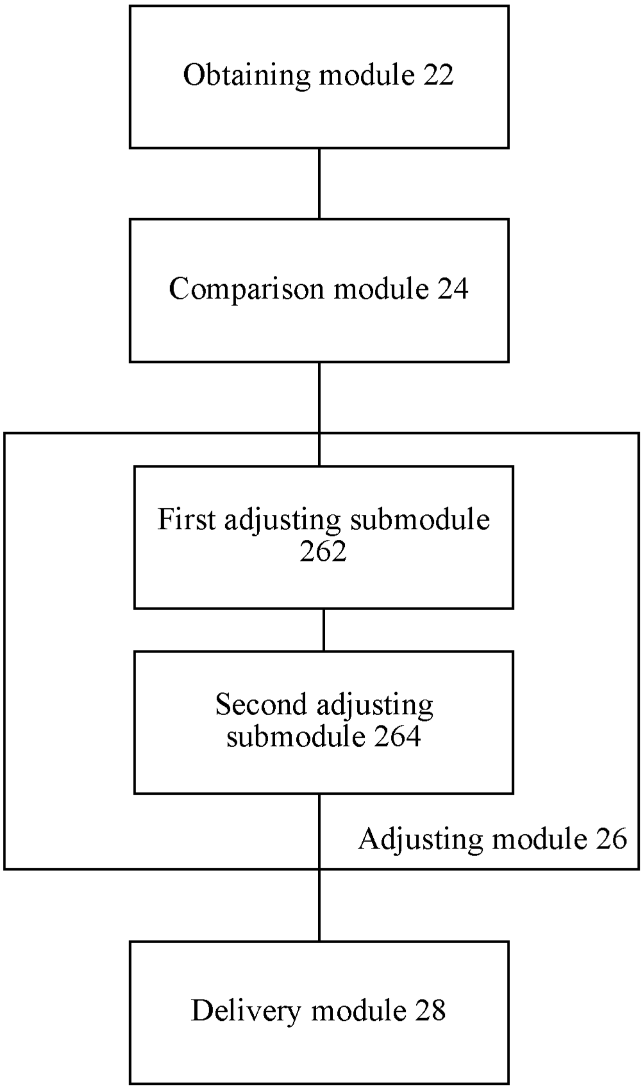
Obtaining module 22
Comparison module 24
First adjusting submodule 262
Second adjusting submodule 264
Adjusting module 26
Delivery module 28

FIG. 7

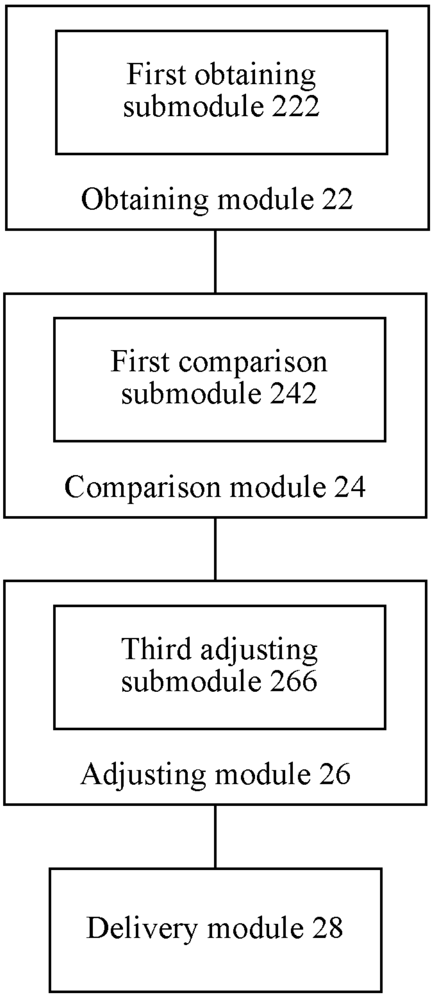
First obtaining submodule 222
Obtaining module 22
First comparison submodule 242
Comparison module 24
Third adjusting submodule 266
Adjusting module 26
Delivery module 28

FIG. 8

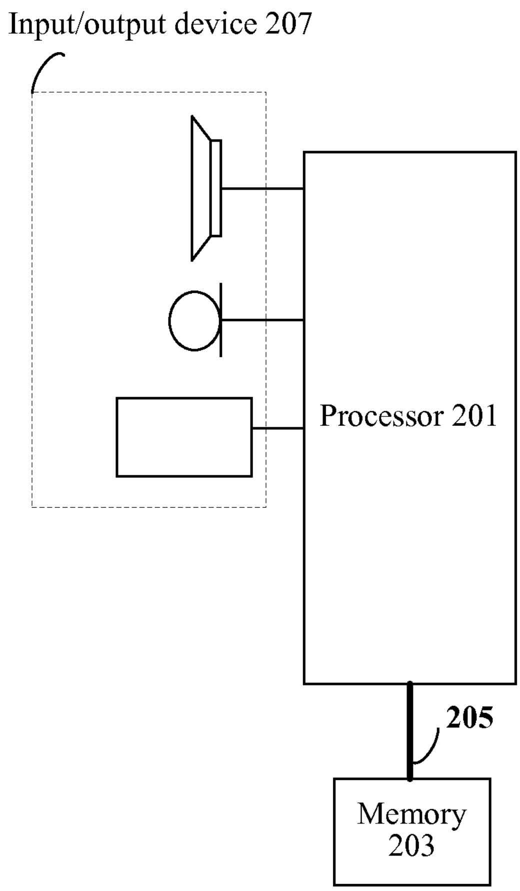


FIG. 9

# INTERNATIONAL SEARCH REPORT

International application No.
**PCT/CN2017/084897**

**A. CLASSIFICATION OF SUBJECT MATTER**

G06F 17/30(2006.01) i

According to International Patent Classification (IPC) or to both national classification and IPC

**B. FIELDS SEARCHED**

Minimum documentation searched (classification system followed by classification symbols)

G06F; G06Q

Documentation searched other than minimum documentation to the extent that such documents are included in the fields searched

Electronic data base consulted during the international search (name of data base and, where practicable, search terms used)

CNABS, CNKI, DWPI, IEEE: media, advertisement, target, destination, aim, expected, desired, actual, number, amount, range, compare, accuracy, directional, put, push, recommend, adjust, change, correlation, association

**C. DOCUMENTS CONSIDERED TO BE RELEVANT**

| Category* | Citation of document, with indication, where appropriate, of the relevant passages | Relevant to claim No. |
|---|---|---|
| PX | CN 106055666 A (TENCENT TECHNOLOGY (SHENZHEN) CO., LTD.), 26 October 2016 (26.10.2016), claims 1-12, and description, paragraphs 21-150 | 1-14 |
| A | CN 105046514 A (TENCENT TECHNOLOGY (SHENZHEN) CO., LTD.), 11 November 2015 (11.11.2015), the whole document | 1-14 |
| A | CN 103377232 A (ALIBABA GROUP HOLDING LIMITED), 30 October 2013 (30.10.2013), the whole document | 1-14 |
| A | CN 104636940 A (TENCENT INC.), 20 May 2015 (20.05.2015), the whole document | 1-14 |
| A | CN 103164805 A (ALIBABA GROUP HOLDING LIMITED), 19 June 2013 (19.06.2013), the whole document | 1-14 |
| A | US 2010114696 A1 (YAHOO INC.), 06 May 2010 (06.05.2010), the whole document | 1-14 |

☐ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&"document member of the same patent family

| Date of the actual completion of the international search | Date of mailing of the international search report |
|---|---|
| 07July 2017 (07.07.2017) | **31August 2017 (31.08.2017)** |

Name and mailing address of the ISA/CN:
State Intellectual Property Office of the P. R. China
No. 6, Xitucheng Road, Jimenqiao
Haidian District, Beijing 100088, China
Facsimile No.: (86-10) 62019451

Authorized officer
**WANG, Xuelian**
Telephone No.:(86-10) **62411747**

Form PCT/ISA/210 (second sheet) (July 2009)

## INTERNATIONAL SEARCH REPORT
Information on patent family members

International application No.
**PCT/CN2017/084897**

| Patent Documents referred in the Report | Publication Date | Patent Family | Publication Date |
|---|---|---|---|
| CN 106055666 A | 26 October 2016 | None | |
| CN 105046514 A | 11 November 2015 | WO 2016206486 A1 | 29 December 2016 |
| | | CN 105046514 B | 17 May 2017 |
| CN 103377232 A | 30 October 2013 | TW 201344477 A | 01 November 2013 |
| | | EP 2842060 A1 | 04 March 2015 |
| | | CN 103377232 B | 07 December 2016 |
| | | JP 5913736 B2 | 11 May 2016 |
| | | US 9117006 B2 | 25 August 2015 |
| | | WO 2013163062 A1 | 31 October 2013 |
| | | US 2013290320 A1 | 31 October 2013 |
| | | JP 2015515079 A | 21 May 2015 |
| CN 104636940 A | 20 May 2015 | None | |
| CN 103164805 A | 19 June 2013 | HK1182822 A0 | 06 December 2013 |
| US 2010114696 A1 | 06 May 2010 | None | |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 201610390304